# EUROPÄISCHE PATENTANMELDUNG

(11) **EP 1 063 333 A1**
(43) Veröffentlichungstag der Anmeldung: **27.12.2000**
(21) Anmeldenummer: 00112493.2
(22) Anmeldetag: 13.06.2000
(51) Int. Cl.: D04H 1/58, E04B 1/82

(54) **Baustoff zur akustischen Abschottung**

(30) Priorität: 26.06.1999 DE 19929137
(71) Anmelder: Möller Plast GmbH, 33649 Bielefeld (DE)
(72) Erfinder: Beckmann, Friedhelm, Dipl.-Ing., 32120 Hiddenhausen (DE)
(74) Vertreter: Schirmer, Siegfried, Dipl.-Ing.

(57) **Zusammenfassung**

Baustoff zur akustischen Abschottung, der wenigstens zwei einstückig miteinander verbundene Naturfaserschichten aufweist, wobei mindestens zwei unterschiedliche Schichten aus einer Schicht mit relativ groben Fasern und/oder einer Schicht mit einem Gemisch aus relativ groben und relativ feinen Fasern und/oder einer Schicht mit relativ feinen Fasern miteinander kombiniert sind.

## Beschreibung

Die Erfindung betrifft einen Baustoff zur akustischen Abschottung.

Im Maschinen- und Fahrzeugbau werden gegenwärtig verstärkt Maßnahmen ergriffen, um durch Motoren und Antriebsaggregate erzeugte Schallpegel zu reduzieren und einen möglichst großen Anteil des als Lärm empfundenen Schalls durch geeignete Schallschutzmaßnahmen zu eliminieren, um so auf einen Wert möglichst deutlich unterhalb von gesetzlich vorgeschriebenen Grenzwerten zu kommen.

Bei bekannten Maßnahmen der Schallabkapselung werden üblicherweise Schaumstoffe oder Synthetikvliese eingesetzt, die den Schall absorbieren und in Wärmeenergie umwandeln. Die Eignung derartiger Stoffe ist weitestgehend von den Werkstoffeigenschaften sowie der Schallaufnahme und der Dicke der schallabsorbierenden Stoffe abhängig.

Die Aufgabe der Erfindung besteht darin, einen verbesserten Baustoff zur akustischen Abschottung bereitzustellen, der hinsichtlich seines Aufbaus günstig und in einfacher Weise an unterschiedliche Anforderungen angepaßt werden kann.

Diese Aufgabe wird erfindungsgemäß durch einen Baustoff zur akustischen Abschottung gelöst, der wenigstens zwei einstückig miteinander verbundene Naturfaserschichten aufweist, wobei mindestens zwei unterschiedliche Schichten aus einer Schicht mit relativ groben Fasern und/oder einer Schicht mit einem Gemisch aus relativ groben und relativ feinen Fasern und/oder einer Schicht mit relativ feinen Fasern miteinander kombiniert sind.

Es kann vorgesehen sein, daß wenigstens zwei Schichten unterschiedlich stark verdichtet und/oder unterschiedlich dick sind. Bevorzugt ist wenigstens eine Schicht aus einer Fasermatte gebildet.

Vorzugsweise bestehen die Naturfasern aus Einjahrespflanzen, insbesondere Flachs, Hanf, Sisal, Jute oder Mischungen daraus, und/oder aus Recyclingprodukten derartiger Fasern, die insbesondere aus Vorprodukten, wie Transportgewebe, gewonnen werden.

Bevorzugt ist vorgesehen, daß die Naturfasern mit thermoplastischem oder duroplastischem Kunststoff und/oder aufschäumbarem Material gebunden sind. Benachbarte Schichten können durch Vernadeln und/oder Kleben und/oder Schweißen miteinander verbunden sein.

Zweckmäßigerweise beinhaltet wenigstens eine Schicht einen Anteil von 3 bis 50 % aus zugesetzten synthetischen Fasern als Stützeinlage. Die thermoplastischen Fasern können aus Polypropylen, Polyester oder Polyamid bestehen. Die synthetischen Fasern können unter Wärmeeinwirkung schmelzbar sein und ein Verkleben der Naturfasern ermöglichen.

In Ausgestaltung der Erfindung kann vorgesehen sein, daß an einer Außenseite eine schmelzbare oder klebende Beschichtung aufgebracht ist, beispielsweise ein schmelzbares oder verklebbares Vlies.

Die Anwendung des erfindungsgemäßen Baustoffs zum Zwecke der akustischen Abschottung beruht auf der Erkenntnis, daß besonders Fasermatten aus nachwachsenden Rohstoffen günstige akustische Eigenschaften aufweisen. Derartige Mattensysteme zur Schalldämmung können in unterschiedlichen Wandstärken unterschiedlich dicht miteinander verbunden werden (z.B. durch Vernadelung oder Verklebung) oder auch in Sandwichbauweise hergestellt werden, wobei eine äußere Schicht weniger verdichtet ist als eine dahinterliegende zweite Schicht. Die Schichten können auch durch Kleben, Schweißen usw. verbunden sein und noch genügend Öffnungsbereiche beinhalten, die eine Schallabsorption ermöglichen. Neben der Faserdichte kann auch die Faserfeinheit variiert werden, so daß beispielsweise ein für die Schallabsorption äquivalenter Wert der Luftdurchlässigkeit entsprechend beeinflußt werden kann.

Zur Abstützung des Naturfaseraufbaus können den Naturfasern synthetische Fasern als Stütz-einlagen in einem Anteil von vorzugsweise 3 bis 50 % zugemischt werden. Diese Stützfasern können durch Energiezufuhr zum Aufschmelzen gebracht werden, so daß eine Art Klebverbindung hergestellt wird. Die synthetischen Fasern können aus Materialien bestehen, die eine Verklebung der Fasern untereinander ermöglichen.

Für den Fall, daß derartige Matten an Formkörpern angebracht werden sollen, besteht die Möglichkeit, diese auf der Verbindungsseite mit einem schmelzbaren oder verklebbaren Vlies zu versehen oder dort eine Schicht aus schmelzklebrigen Medien aufzubringen, so daß eine vollflächige Verbindung mit einem Konturteil hergestellt werden kann.

Erfindungsgemäß sind beliebige Kombinationen beispielsweise zwischen den folgenden Materialschichten möglich: mindestens eine Lage grober Fasern; mindestens eine Lage eines Gemischs grober und feiner Fasern; mindestens eine Lage feiner Fasern; wobei diese Lagen stark oder schwach verdichtet sein können und unterschiedliche Dicke aufweisen können.

## Patentansprüche

1. Baustoff zur akustischen Abschottung, der wenigstens zwei einstückig miteinander verbundene Naturfaserschichten aufweist, wobei mindestens zwei unterschiedliche Schichten aus einer Schicht mit relativ groben Fasern und/oder einer Schicht mit einem Gemisch aus relativ groben und relativ feinen Fasern und/oder einer Schicht mit relativ feinen Fasern miteinander kombiniert sind.

2. Baustoff nach Anspruch 1, dadurch gekennzeichnet, daß wenigstens zwei Schichten unterschiedlich stark verdichtet sind.

3. Baustoff nach Anspruch 1 oder 2, dadurch gekennzeichnet, daß wenigstens zwei Schichten unterschiedlich dick sind.

4. Baustoff nach einem der vorangehenden Ansprüche, dadurch gekennzeichnet, daß wenigstens eine Schicht aus einer Fasermatte gebildet ist.

5. Baustoff nach einem der vorangehenden Ansprüche, dadurch gekennzeichnet, daß die Naturfasern aus Einjahrespflanzen, insbesondere Flachs, Hanf, Sisal, Jute oder Mischungen daraus, und/oder aus Recyclingprodukten derartiger Fasern, die insbesondere aus Vorprodukten, wie Transportgewebe, gewonnen werden, bestehen.

6. Baustoff nach einem der vorangehenden Ansprüche, dadurch gekennzeichnet, daß die Naturfasern mit thermoplastischem oder duroplastischem Kunststoff und/oder aufschäumbarem Material gebunden sind.

7. Baustoff nach einem der vorangehenden Ansprüche, dadurch gekennzeichnet, daß benachbarte Schichten durch Vernadeln und/oder Kleben und/oder Schweißen miteinander verbunden sind.

8. Baustoff nach einem der vorangehenden Ansprüche, dadurch gekennzeichnet, daß wenigstens eine Schicht einen Anteil von 3 bis 50 % an zugesetzten synthetischen Fasern als Stützeinlage aufweist.

9. Baustoff nach Anspruch 8, dadurch gekennzeichnet, daß die thermoplastischen Fasern aus Polypropylen, Polyester oder Polyamid bestehen.

10. Baustoff nach Anspruch 8 oder 9, dadurch gekennzeichnet, daß die synthetischen Fasern unter Wärmeeinwirkung schmelzbar sind und ein Verkleben der Naturfasern ermöglichen.

11. Baustoff nach einem der vorangehenden Ansprüche, dadurch gekennzeichnet, daß an einer Außenseite eine schmelzbare oder klebende Beschichtung aufgebracht ist.

12. Baustoff nach Anspruch 11, gekennzeichnet durch ein schmelzbares oder verklebbares Vlies.
